(19) Europäisches Patentamt
European Patent Office
Office européen des brevets

(11) **EP 1 449 609 B1**

(12) **EUROPEAN PATENT SPECIFICATION**

(45) Date of publication and mention
of the grant of the patent:
**28.05.2008 Bulletin 2008/22**

(51) Int Cl.:
**B23H 1/06** (2006.01)      **B23H 1/04** (2006.01)

(21) Application number: **04003745.9**

(22) Date of filing: **19.02.2004**

(54) **Electric discharge machining electrode**

Funkenerosionsbearbeitungselektrode

Electrode d'usinage par étincelage

(84) Designated Contracting States:
**DE FR GB IT**

(30) Priority: **24.02.2003 JP 2003046248**

(43) Date of publication of application:
**25.08.2004 Bulletin 2004/35**

(73) Proprietor: **MITUTOYO CORPORATION**
**Kawasaki-shi,**
**Kanagawa 213-8533 (JP)**

(72) Inventors:
• **Sotomitsu Hara**
**305-0854 Ibaraki (JP)**

• **Shinichirou Yanaka**
**305-0854 Ibaraki (JP)**

(74) Representative: **Altenburg, Udo et al**
**Patent- und Rechtsanwälte**
**Bardehle . Pagenberg . Dost .**
**Altenburg . Geissler**
**Postfach 86 06 20**
**81633 München (DE)**

(56) References cited:
**US-A- 3 290 124**      **US-A- 4 027 134**

**Description**

BACKGROUND OF THE INVENTION

1. FIELD OF THE INVENTION

This invention relates to an electric discharge machining electrode suitable as an electrode used for an electric discharge machine, an engraving electric discharge machine, a wire electric discharge machine, a micro electric discharge machine, a generating electric discharge machine and the like which are adapted to subject a work to an electric discharge machining process by generating electric discharge pulses between the work and such an electrode disposed with a space kept between the work and the electrode, and an electric discharge machining apparatus; and more particularly to an electric discharge machining electrode capable of improving the quality of a finished surface of the work by heightening a machining speed by improving an electric discharge generation rate $\eta$ even in a fine machining process and even when the conditions including a time width and a voltage of the electric discharge pulses applied to the electric discharge machining electrode are the same, and by rendering it possible to maintain the electric discharge generation rate $\eta$ even when a time width and an applied voltage of each pulse are reduced, and an electric discharge machine. The present invention is preferably used for a micro electric discharge machining process.

2. DESCRIPTION OF THE RELATED ART

When in an electric discharge machining process a time width (which will hereinafter be referred to simply as a pulse width) of pulses of a voltage (which will hereinafter be referred to as a gap voltage) applied to a position between a work and an electric discharge machining electrode is large, a finished surface of the work becomes similar to the skin of a pear, i.e., the quality of a finished product lowers. Therefore, the pulse width is set small in accordance with the highness of demanded quality of a finished product.

However, when the pulse width is set small, a phenomenon of a failure in generation of electric discharge comes to occur frequently notwithstanding that a voltage pulse is applied to a position between a work and an electrode. Especially, when a work is small, i.e., when an electrode-opposed area of a work is small, and when a gap voltage is low, such a phenomenon occurs noticeably.

The causes of such a failure in generation of electric discharge resides in that correspondingly much time is needed to electrolytically dissociate an interelectrode substance existing between a work and an electric discharge electrode therefrom, i.e. a so-called processing liquid, such as pure water and oil therefrom.

The electric discharge generation rate $\eta$ will be defined as follows.

$$\text{Electric Discharge Generation Rate } \eta = \{(\text{Number of Generation of Electric Discharge}) / (\text{Number of Applied Pulses})\} \times 100 \ [\%]$$

In the above equation, the (Number of Applied Pulses) is the number of applied pulses of a gap voltage, and the (Number of Generation of Electric Discharge) the number of the electric discharge pulses generated when the voltage pulses are applied to a position between a work and an electrode. Accordingly, in a case where electric discharge pulses occur at all times when the pulses of a gap voltage are applied to a position between a work and an electrode, the electric discharge generation rate $\eta$ in the above equation becomes 100%.

A rough, practical example will now be shown. When a gap voltage and a pulse width of the applied voltage are 100V and 10 nano-seconds respectively, an electric discharge generation rate $\eta$ is only around 1% at the highest. However, when the pulse width is 10 micro-seconds with the gap voltage at the same level, the electric discharge generation rate $\eta$ becomes limitlessly close to 100%. It is true that, when the pulse width is 10 nano-seconds, a processed surface made of a sub-specular surface close to a specular surface is obtained but, when the pulse width is 10 micro-seconds, a processed surface becomes similar to the skin of a pear and extremely rough.

It has been ascertained that, even when the pulse width is set small, the electric discharge generation rate $\eta$ can be improved when the gap voltage is heightened. However, when the gap voltage is heightened, a processed surface becomes similar to the skin of a pear, and the quality of a finished product lowers.

When a work has a certain degree of sizes, the area thereof opposed to an electric discharge machining electrode becomes wide, so that the electric discharge generation rate $\eta$ becomes high as compared with that in a case where a work has a small area opposed to an electric discharge machining electrode. It is generally said that, when the area of a work which is opposed to such an electrode is up to 0.2 mm x 50 mm, the electric discharge generation rate $\eta$ is improved in proportion to an exponent of the area. Such relation between the electric discharge generation rate $\eta$ and the area of a work opposed to an electric discharge machining electrode is called an area effect in an idiomatic phrase in this world of industry.

However, since the fine electric discharge machining of a work of a small area of 5 $\mu$m x 5 $\mu$m to 25 $\mu$m x 100 $\mu$m is also much in demand, it is necessary that an electric discharge generation $\eta$ concerning a work of such an area does not decrease either.

In view of the above, when a finely machined finished product of a high quality having a sub-specular surface is demanded, it is unavoidable that an electric discharge generation rate $\eta$ decreases. This necessarily causes a machining rate to decrease.

US-A-4 027 134 discloses an electrode for electrical discharge machining formed of a tungsten-based alloy including Ag and/or Cu, 15 to 40% by weight, and ZrO2, 0.5 to 10% by weight.

SUMMARY OF THE INVENTION

The present invention has been made with a view to solving these problems encountered in the related techniques of this kind, and aims at providing an electric discharge machining electrode capable of improving the quality of a finished surface of a work by heightening a machining speed by improving an electric discharge generation rate $\eta$ even in a fine machining process and even when the conditions including a time width and a voltage of the electric discharge pulses applied to the electric discharge machining electrode are the same, and by rendering it possible to maintain the electric discharge generation rate $\eta$ even when a time width and an applied voltage of each pulse are reduced, and an electric discharge machining apparatus.

The present invention solved these problems by providing an electric discharge machining electrode as defined in claim 1 and an electric discharge machining apparatus as defined in claim 2.

The electric discharge machining electrode according to the present invention is different from a related art electric discharge machining electrode of a superhard material only in that the former electrode has radioactivity, and the other characteristics of the former electrode can be set identical with those of the latter electrode. Therefore, the mechanical characteristics, such as rigidity as well as electric characteristics of the electrode according to the present invention can be set identical with those a related art electrode, which has actual past results, for an electric discharge machining process, so that the reliability of the electrode according to the present invention during the use thereof for the electric discharge machining of a work can be secured easily.

The operation of the present invention will now be simply described.

In the electric discharge machining electrode according to the present invention, a radioactive metal is contained at least in the portion thereof in which electric discharge pulses occur, or in the portion thereof which is in the vicinity of the mentioned portion. The radiant rays emitted by the radioactive metal contained in the electrode exert influence upon the materials existing between a work and electric discharge machining electrode, which are usually, a so-called processing liquid, such as pure water and oil, and work so as to promote the electrolytic dissociation of these materials therefrom. This electrode is formed so as to induce electric discharge used for the machining of a work with the operation of the radiant rays utilized as so to speak a trigger. The radiant rays in use are beta rays formed of electrons.

Accordingly, the electric discharge comes to occur easily between the work and electric discharge machining electrode. As mentioned above, when the electrode-opposed area of the work is small, the demanded quality of a processed product is high. Therefore, even when it is necessary to reduce the pulse width or gap voltage to a low level, the electric discharge generation rate $\eta$ can be improved.

According to the present invention described above, the improving of the quality of a finished surface of a work can be done by improving an electric discharge generation rate $\eta$ even in a fine machining process and even when the conditions including a time width and a voltage of the electric discharge pulses applied to the electrode for an electric discharge machining process are the same, and thereby improving a machining rate, and by rendering it possible to maintain the electric discharge generation rate $\eta$ even when the time width of the pulses and applied voltage are reduced.

The portion of the electric discharge machining electrode in which a radioactive metal is contained may be a portion as long as the portion can induce the electric discharge by the radiant rays emitted by the radioactive metal as mentioned above, and the present invention does not specially limit such a portion of the electrode to the mentioned portion. The matter also depends upon the intensity of the radioactivity of the radioactive metal. The portion of the electrode in which the radioactive metal is contained may not be the whole of the electrode. In a general electric discharge machining process, the portion of an electrode in which a radioactive metal is to be contained is preferably at least a portion in which electric discharge pulses occur.

BRIEF DESCRIPTION OF THE DRAWINGS

A preferred embodiment of the present invention will now be described with reference to the accompanying drawings, wherein:

   Fig. 1 is a block diagram showing the construction of a principal portion of an electric discharge machine in a mode of embodiment to which the present invention is applied;
   Fig. 2 is an enlarged view of the portion of Fig. 1 which is enclosed with one-dot chain lines;
   Fig. 3 is a sectional view taken along the line III-III' in Fig. 2, which includes the electric discharge machining electrode, and viewed in the direction of an arrow A in the same drawing; and
   Fig. 4 is a time chart of a gap voltage Vg in the mode of embodiment referred to above.

DESCRIPTION OF THE PREFERRED EMBODIMENT

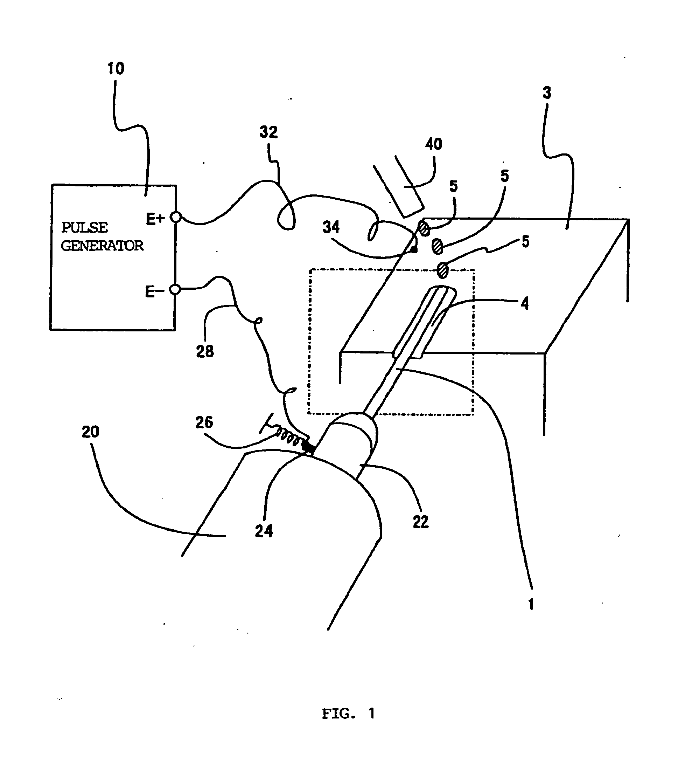

Fig. 1 is a block diagram showing the construction of an electric discharge machine in a mode of embodiment to which the present invention is applied.

In this mode of embodiment, a work 3 has on an upper side thereof a surface 4 to be machined. An electric discharge machining electrode 1 has a pin-like shape, and is 0.3 mm in thickness $\phi$ and around 10 mm in length. The electric discharge machining electrode 1 was made of a superhard material obtained by sintering a mixture containing fine powder of tungsten and cobalt. This superhard material is different from a common superhard material. In this mode of embodiment, the superhard material is irradiated with neutrons as will be described later, and the cobalt is turned into radioactive 60Co. As is clear from Fig. 1, the dimensions of the work 3 are comparatively small as compared with those of the above-mentioned electric discharge machining electrode 1.

Between an outer cylindrical circumferential surface of the electric discharge machining electrode 1 and a surface 4 to be machined, electric discharge pulses used for the machining of the surface 4 occur. From a dropping unit 40, a so-called processing liquid shown by a reference numeral 5 is dropped. This mode of embodiment also includes as an object thereof machining a work by using electric discharge pulses generated in the air without using a processing liquid. In this case, the effect ascribed to the applying of the present invention can also be obtained.

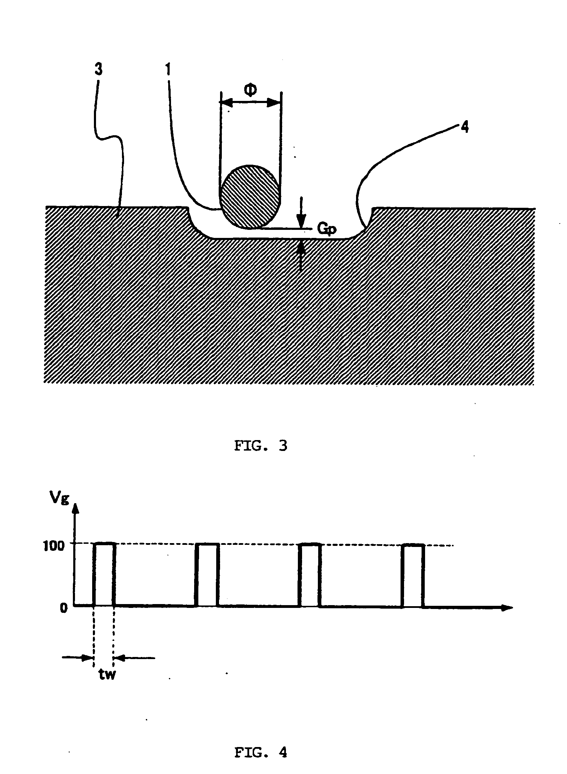

A pulse generator 10 constitutes a power source unit for giving a pulse type gap voltage Vg of a predetermined pulse width to the work 3 and electric discharge machining electrode 1. The gap voltage Vg is applied to the work and electrode in such a manner as will be described later by using, for example, Fig. 4.

Therefore, a power source terminal E+ on a positive side of the pulse generator 10 is connected to a portion of the work shown by a reference numeral 34, via a cable 32. A power source terminal E- on a negative side is connected to a brush 24 via a cable 28. The brush 24 is pressed down by a spring 26 against a holder 22, which is fixed to an insulating spindle 20, in such a manner that a current-supplied condition is maintained. The holder 22 is in a conductive state with respect to the electrode 1 for an electric discharge machining process fixed to the holder 22. Accordingly, the power source terminal E-and electrode 1 are also in a mutually conductive state.

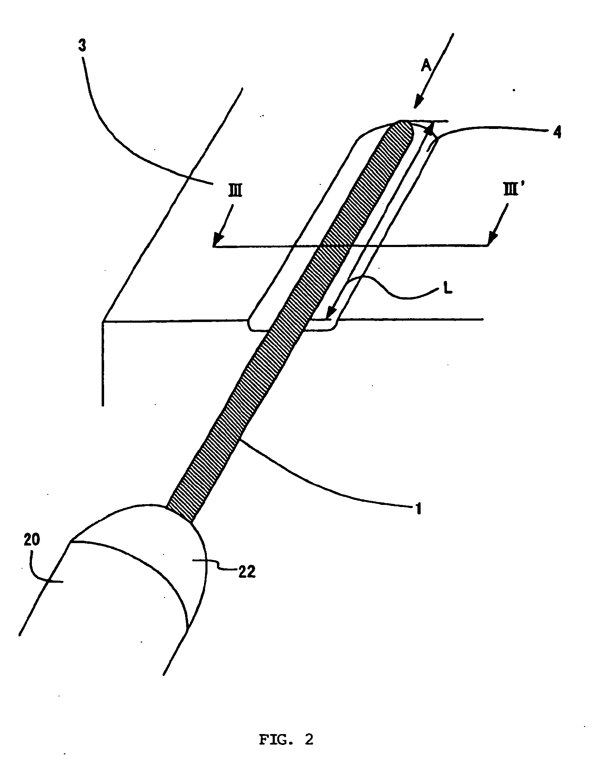

Fig. 2 is an enlarged view of a portion enclosed with one-dot chain lines in Fig. 1. In this Fig. 2, the electric discharge machining electrode 1 is shown by rightwardly lowering diagonal lines. The portion of this electrode 1 in which electric discharge pulses can be generated is the portion of a length L measured from a free end thereof as shown in the drawing.

Fig. 3 is a sectional view taken along the line III-III' in Fig. 2 which includes an electric discharge machining electrode 1, and viewed in the direction of an arrow A in the same drawing.

Referring to Fig. 3, the electrode 1 for an electric discharge machining process is shown by rightwardly lowering diagonal lines, and the work 3 by rightwardly rising diagonal lines. As shown in the drawing, the electric discharge machining electrode 1 keeps a clearance as an electric discharge gap Gp with respect to the surface 4 to be machined of the work 3. The electric discharge gap Gp is about 1 $\mu$m. In this gap Gp, a machining liquid made to drop by the dropping unit 40 as mentioned above is permeated.

The electric discharge machining electrode 1, a part to which the present invention is mainly applied in this mode of embodiment will now be described.

The material of the electrode 1 for an electric discharge process is a superhard material obtained by sintering a mixture containing at least fine powder of tungsten and cobalt. When the mixture is sintered, the cobalt is 59Co existing in the natural world, and does not have a radioactivity.

In this mode of embodiment, for example, several thousands pieces of electrodes 1 for an electric discharge process are left together in a nuclear reactor after the sintering operation finishes. Neutrons are thereby applied to each electrode 1. When the cobalt is turned from 59Co into 60Co, the electrodes 1 are taken out from the nuclear reactor. The intensity of the radioactivity is determined at this time to ascertain that the radioactivity is 100 M becquerel. Namely, it is ascertained by conducting a measurement operation that the electrodes 1 come to be provided with sufficient radioactivity.

When the cobalt is turned from 59Co into 60Co, the cobalt comes to emit the following radiant rays.

Firstly, beta rays of 0.3 MeV are emitted.

Secondly, gamma rays of 1.1 MeV are emitted.

Thirdly, gamma rays of 1.3 MeV are emitted.

Among these radiant rays, the beta rays are used in this mode of embodiment. The beta rays are currents of electrons. Therefore, when the electric discharge machining of a work is done with a material containing this cobalt 60Co used as an electric discharge machining electrode which forms a negative pole, electrons are sent out therefrom without receiving the influence of the work function of the electrode 1 and work 3 and the processing liquid 5 interposed between the electrode 1 and work 3.

An electric discharge machining electrode 1 the intensity of radioactivity of which has been ascertained as mentioned above is fixed to a holder 22, and the resultant holder 22 is secured to an insulating spindle 20 as shown in Fig. 1 and Fig. 2. A pulse type gap voltage Vg is applied to a position between the electrode 1 and work 3 as a processing liquid 5 is dropped suitably therebetween from a dropping unit 40, to generate electric discharge pulse.

When the intensity of radioactivity in this embodiment is 100 M bequerel as mentioned above, 100 M pieces of electrons occurs per second in the electrode 1 as a whole. The energy of these emitted electrons is 0.3 MeV. Namely, each emitted electron has energy accelerated at 300,000 V, and the electrons can pass through a processing liquid 5 over a distance of several micronmeters certainly even when the processing liquid has insulation characteristics, so that the electrons can pass certainly through the electric discharge gap Gp shown in Fig.3. The beta rays cause the electrolytic dissociation of the processing liquid, so that the electric current is easily induced in the processing liquid. As a result, the electric discharge generation rate $\eta$ is increased. The same applies to a case where a work is machined by generating electric discharge pulses in the air without using the processing liquid 5.

Fig. 4 is a time chart of the gap voltage Vg in this mode of embodiment.

In this mode of embodiment, a gap voltage Vg of about 100 V as shown in Fig. 4 is applied from the pulse generator 10 to a position between the work 3 and electrode 1. The pulse width tw is 10 nano-seconds. When the intensity of radioactivity is 100 M bequerel as mentioned above, one electron on an average comes to be emitted during a period of time of 10 nano-seconds. Accordingly, it comes to be possible that an electric discharge pulse occurs reliably even when the pulse width is as very short as 10 nano-seconds.

In short, electric discharge is excited every time one beta ray occurs to cause one electron to be emitted. Consequently, the electric discharge frequency increases greatly, and the electric discharge generation rate $\eta$ approaches limitlessly to 100%.

In this mode of embodiment described above, the electric discharge generation rate $\eta$ can be maintained 100% even when a gap voltage Vg of about 100V has a very small pulse width of 10 nano-seconds, or even when a work 3 is small and cannot take a large electrode-opposed area. Therefore, a finely machined surface made of a sub-specular surface of a high appearance quality can be obtained without causing a machining rate to decrease. Thus, in this mode of embodiment, the present invention can be applied thereto effectively, and an excellent effect can be obtained.

The half life of the cobalt 60Co is five years. Therefore, when the cobalt 60Co is stored for around twenty years, the radioactivity thereof is attenuated to around 1/16. Accordingly, the disposal of a used electric discharge machining electrode 1 can be carried out comparatively easily.

According to the present invention, the quality of a finished surface of a work can be improved by improving an electric discharge generation rate $\eta$ even in a fine machining operation and even when the conditions including a time width and a voltage of the electric discharge pulses applied to the electric discharge machining electrode are the same, and thereby improving a machining speed, and by rendering it possible to maintain the electric discharge generation rate $\eta$ even when the time width of the pulses and applied voltage are reduced. Especially, the present invention is preferable for a micro electric discharge machining process.

## Claims

1. An electric discharge machining electrode (1) used for machining an object surface of a work (3) by generating electric discharge pulses between the work (3) and the electrode (1) disposed with a clearance kept with respect to the work,

   the electrode (1) comprising a radioactive metal contained at least in the part of a portion thereof in which the electric discharge pulses occur, or in the part thereof which is in the vicinity of the mentioned portion thereof, **characterized in that**

   the material for the electrode (1) is a superhard material obtained by sintering a mixture containing at least fine powder of tungsten and cobalt,

   neutrons being applied to the superhard material, radioactive cobalt atoms being thereby substituted for the cobalt atoms to form the radioactive metal, and
the radioactive metal being used as a negative pole.

2.  An electric discharge machining apparatus comprising an electric discharge machining electrode (1) according to Claim 1.

**Patentansprüche**

1.  Funkenerosionsbearbeitungselektrode (1), verwendet zum Bearbeiten einer Gegenstandsoberfläche eines Arbeitsstücks (3) durch Erzeugen eines Funkenerosionspulses zwischen dem Arbeitsstück (3) und der Elektrode (1), welche mit einem Abstand angeordnet ist, der in Bezug zu dem Arbeitsstück eingehalten wird,
    wobei die Elektrode (1) ein radioaktives Metall umfasst, welches zumindest in dem Teil eines Abschnittes davon beinhaltet ist, in welchem die Funkenerosionspulse auftreten, oder in dem Teil davon, welcher sich in der Nähe des erwähnten Abschnittes davon befindet,
    **dadurch gekennzeichnet,**
    **dass** das Material für die Elektrode (1) ein superhartes Material ist, welches durch Sintern einer Mischung erhalten wird, die zumindest feines Pulver aus Wolfram und Kobalt enthält, wobei Neutronen auf das superharte Material angewandt werden, wobei radioaktive Kobaltatome durch die Kobaltatome ersetzt werden, um das radioaktive Metall zu bilden, und das radioaktive Metall als ein negativer Pol verwendet wird.

2.  Funkenerosionsbearbeitungsvorrichtung, umfassend eine Funkenerosionsbearbeitungselektrode (1) nach Anspruch 1.

**Revendications**

1.  Électrode pour usinage par décharge électrique (1) utilisée pour usiner une surface cible d'une pièce de travail (3) en générant des impulsions de décharge électrique entre la pièce de travail (3) et l'électrode disposée de façon qu'un jeu soit maintenu avec la pièce de travail,
    l'électrode (1) comprenant un métal radioactif qui est contenu au moins dans une partie de la région de l'électrode dans laquelle se produisent les impulsions de décharge électrique, ou dans une partie de l'électrode qui est voisine de la région mentionnée de celle-ci,
    **caractérisée en ce que**
    le matériau pour l'électrode (1) est un matériau ultra-dur obtenu par frittage d'un mélange contenant au moins une fine poudre de tungstène et de cobalt, des neutrons étant appliqués sur le matériau ultra-dur, des atomes de cobalt radioactifs étant ainsi substitués aux atomes de cobalt pour former le métal radioactif, et
    le métal radioactif étant utilisé en tant que pôle négatif.

2.  Appareil d'usinage par décharge électrique comprenant une électrode pour usinage par décharge électrique (1) selon la revendication 1.

FIG. 1

FIG. 2

FIG. 3

FIG. 4

**EP 1 449 609 B1**

**REFERENCES CITED IN THE DESCRIPTION**

**Patent documents cited in the description**

- US 4027134 A